Europäisches Patentamt

European Patent Office

Office européen des brevets

(11) Publication number: **0 464 725 A1**

## EUROPEAN PATENT APPLICATION

(21) Application number: **91110792.8**

(22) Date of filing: **28.06.91**

(51) Int. Cl.5: **A01K 27/00, B65H 75/44**

(30) Priority: **03.07.90 IT 4164590**

(43) Date of publication of application:
**08.01.92 Bulletin 92/02**

(84) Designated Contracting States:
**AT BE CH DE DK ES FR GB GR LI LU NL SE**

(71) Applicant: **ASKOLL S.p.A.**
**Via Industria 11, Z.I.**
**I-36030 Povolaro Dueville (Province of Vicenza)(IT)**

(72) Inventor: **Marioni, Elio**
**Via G. Rossi, 29**
**I-36031 Dueville, Vicenza(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Rewindable leash.**

(57) The rewindable leash includes a box-like structure (1) from which a grip handle (4) extends and in which a spool (6) is rotatably retained and a cord (7) which is wound on the spool. The spool (6) is connected with a spiral rewinding spring (11). The leash is provided with a pawl (20) which engages teeth (19) of the spool (6), preventing its rotation. The movement of the pawl is performed in contrast with a metallic leaf spring (24). A locking element (27) suitable for locking the pawl (20) in a position of engagement with one of the teeth (19) cooperates with the pawl itself (20).

Fig.6

The present invention relates to a rewindable leash.

Rewindable leashes are currently commercially available which are substantially constituted by a box-like supporting structure in which a roller is rotatably retained, and a cord, fixable to a collar, is wound on said roller.

Said roller is conveniently rigidly associated with an internal spiral spring which causes its rewinding.

The cord unreeled from the roller passes inside a handle defined in the box-like structure and then exits therefrom with the end to which the collar is fixed.

In order to allow locking at the required condition of unreeling length of the cord, in contrast with the rewinding action of the spring, push-button clamping devices are arranged on the handle and act directly on said cord, a portion of which is conveniently passed over a contrast element.

However, the action exerted directly on the surface of the cord causes its deterioration in the course of time, due to the rubbing of the clamping device, in the step immediately prior to locking and immediately following release, and thus leads to the breakage of said cord.

The clamping is furthermore often inadequate to contrast the traction frequently exerted by the animals restrained by the collar, such as dogs, and despite the locking situation the cord is progressively completely unreeled from the roller.

This, besides entailing difficulties for the user, leads to the rapid deterioration of the cord, which slides under the pressure of the clamping device.

The aim of the present invention is to provide a rewindable leash which eliminates the disadvantages described above in known types.

A consequent primary object is to provide a rewindable leash which can be used in safety conditions for the user and so that the animal restrained by the collar and leash cannot unreel it, in locking condition, by pulling.

Another important object is to provide a rewindable leash which is provided with winding locking and release means which can be operated by a single finger of the hand which holds it.

Still another object is to provide a rewindable leash which is compact and functional.

Not least object is to provide a rewindable leash which can be manufactured at low cost with conventional production facilities.

This aim, these objects and others which will become apparent hereinafter are achieved by a rewindable leash as defined in the appended claims.

Further characteristics and advantages of the invention will become apparent from the detailed description of an embodiment thereof, illustrated only by way of non-limitative example in the accompanying drawings, wherein:

figure 1 is an external perspective view of the leash according to the invention;

figure 2 is a perspective view of the inner elements of the leash of figure 1;

figure 3 is a view of an internal detail of the leash of figure 1 when the unwinding of the cord is blocked;

figure 4 is a view of the detail of figure 3 in released conditions;

figure 5 is a diametrical sectional view of the spool on which the cord is wound;

figure 6 is an exploded view of the leash according to the invention.

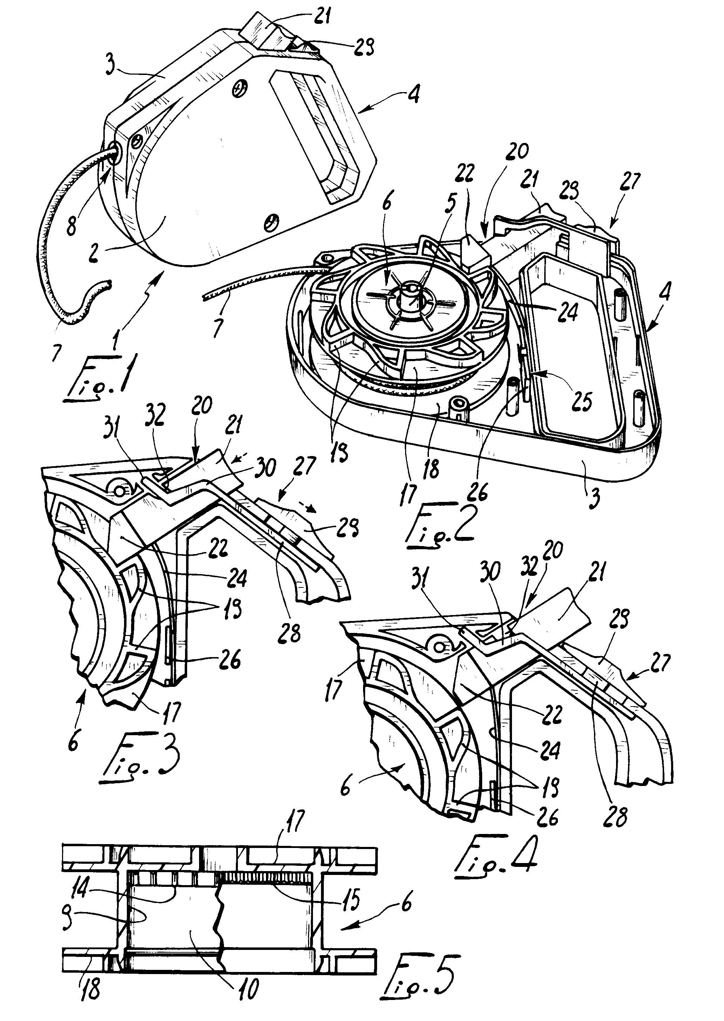

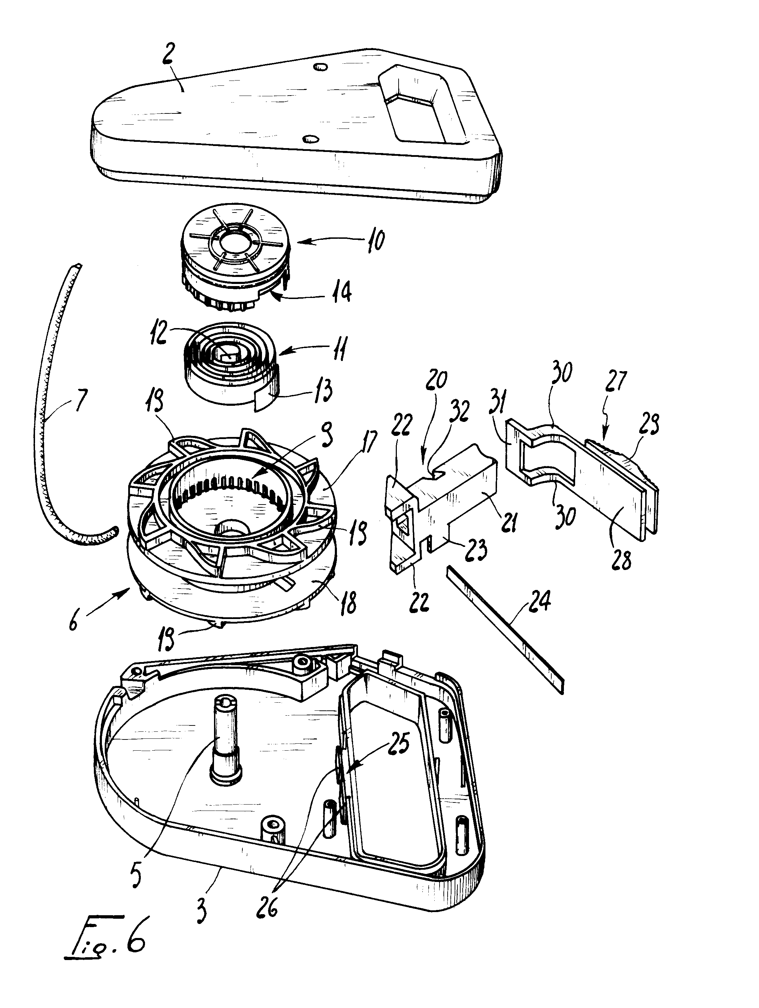

With reference to the above figures, the rewindable leash according to the invention comprises a box-like supporting structure 1 which is composed of two half-shells made of plastic material, respectively 2 and 3, which are mutually associable by virtue of snap-together means.

The box-like structure 1 is conveniently shaped so as to form a grip handle 4 which is arranged above the portion in which winding mechanisms are accommodated.

A spool 6 is rotatably retained about a pivot 5 inside said boxlike structure 1; a cord 7 is wound on said spool and is fixed thereto with one of its ends; its other end, to be coupled to a collar which is not illustrated, exits through an adapted hole 8 of the structure 1.

A cup-shaped container 10 is inserted in an axial cylindrical seat 9 of said spool 6, and a spiral spring 11 is accommodated therein; the central end 12 of said spring is conveniently inserted and locked in a diametrical seat, not illustrated, of the pivot 5.

The peripheral end 13 of the spring 10 is conveniently bent back and inserted and locked in a peripheral seat 14 of the container 10.

Small teeth 15 extend circumferentially on the edge of said container 10 and are suitable for engaging corresponding small teeth 16 defined in the seat 9 so as to lock the rotation of said container 10 with respect to the spool 6.

According to the invention, teeth 19 extend circumferentially laterally to the flanges 17 and 18 of the spool 6, and a pawl 20 is engageable with said teeth; said pawl is substantially constituted by a parallelepipedal push-button 21 which is substantially radial with respect to the spool 6, can slide in an adapted front seat of the structure 1 and has, at its end which is inside said structure, two parallel teeth 22 suitable for inserting themselves in the seats defined between two consecutive teeth 19.

Conveniently, said push-button 21 is arranged in a region where the thumb of the hand which grips the handle 4 can rest comfortably.

Advantageously, the end of a metallic leaf spring 24 is inserted between one of the teeth 22 and a tab 23 which extends from the push-button 21; said leaf spring is inserted and locked, with its opposite end, in a seat 25 which is defined between the wall of the structure 1 and tabs 26 which extend, again from the structure 1, parallel to said wall.

Said spring 24 exerts an action which is suitable for moving the push-button 21 so as to disengage the teeth 22 from the spool 6.

A locking element 27 cooperates with said push-button 21 of the pawl 20 and is constituted by a slider 28 which can slide between the walls of the handle 4 in a region which lies to the side of the push-button 21.

Said slider is provided with a push-button 29 which extends outside the handle 4 and is substantially aligned with the push-button 21.

Two parallel tabs 30 extend from said slider 28 and, passing along the sides of the push-button 21, end, on the opposite side of said push-button 21 with respect to the push-button 29, with a transverse element 31 which associates them.

Said transverse element 31 is suitable for being inserted in a notch 32 of the push-button 21 which arranges itself in a suitable position when said push-button is lowered and engages the spool 6 with its teeth 22.

In this position, the rotation of the spool 6 and thus the unreeling and the rewinding of the cord 7 are blocked.

The placement of the two push-buttons 21 and 29 is such that the locking and release operation, which comprises, in a first case, a pressure on the push-button 21 and the subsequent sliding of the push-button 29 and, in a second case, only the sliding of the push-button 29 which by releasing the push-button 21 causes the spring 24 to move it upward, can be performed simply and merely with the thumb of the hand which grips.

For this purpose, the two push-buttons have surface knurlings in order to increase grip.

As regards operation, after fixing the collar to an animal and gripping the leash, it is sufficient to let said animal pull the cord, unreeling it from the spool 6 up to the required length, after which locking is performed by means of the push-buttons 21 and 29.

After use, it is sufficient to move the push-button 29 which, by releasing the push-button 21, releases the spool 6 and thus the spring 10, which rewinds the cord 7 on said spool.

At this point it should be noted that the locking mechanisms no longer act on the cord, as in current leashes, but on the spool on which said cord is wound, thus avoiding deteriorations of said cord in the course of time.

This also makes it impossible for the cord to slide despite the locking when it is subjected to considerable traction.

The leash according to the invention can furthermore be operated with a single hand and can be locked simply with one finger, thus being characterized by extreme practicality of use.

It is furthermore fully enclosed and suitable for operating in maximum safety conditions.

Finally, most of its components are manufactured with conventional machines for the injection-molding of thermoplastic materials.

In practice it has thus been observed that the rewindable leash according to the invention has achieved the intended aim and objects.

The invention thus conceived is susceptible to numerous modifications and variations, all of which are within the scope of the inventive concept.

All the details may furthermore be replaced with other technically equivalent elements.

In practice, the materials employed, so long as compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Rewindable leash comprising a box-like supporting structure (1) with a grip handle (4), a spool (6) being rotatably retained in said structure, a cord (7) being wound on said spool and being associated with elastic rewinding means (11), said leash being characterized in that it comprises a pawl (20) which is suitable for engaging, in contrast with elastic means (24) which are associated therewith, teeth (19) of said spool, thereby locking the rotation of said spool, and means (27) suitable for locking said pawl in a position in which it engages said teeth cooperating with said pawl.

2. Rewindable leash according to claim 1, characterized in that said pawl comprises a substantially parallelepipedal push-button (21) which can slide in a corresponding seat of said box-like structure (1) at the front part of said grip handle (4), two parallel and mutually flanking teeth (22) extending from said push-button, said push-button being arranged substantially radially with respect to said spool (6).

3. Rewindable leash according to claims 1 and 2, characterized in that said elastic contrast means of said pawl (20) comprise a metallic leaf spring (24) which is inserted with one end in a seat defined between a tab (23) which extends from said push-button (21) and one of said teeth (22) of said push-button, the other end of said spring (24) being fixed inside said box-like structure (1), said spring (24) pushing said push-button (21) toward the outside of the box-like structure (1).

4. Rewindable leash according to one or more of the preceding claims, characterized in that the teeth (19) of said spool (10) are arranged circumferentially laterally to its flanges (17,18), the teeth (22) of said pawl (20) being suitable for engaging said teeth (19).

5. Rewindable leash according to one or more of the preceding claims, characterized in that said means (27) suitable for locking said pawl (20) comprise a slider (28) which is slidingly associated with said box-like structure (1) in a front region of said handle (4) which is aligned with said push-button (21) of said pawl (20), said slider (28) being externally provided with another push-button (29), two parallel tabs (30) extending from said slider (28) and, by passing laterally by the push-button (21) of said pawl (20), ending with a transverse locking element (31) which associates them and is suitable for inserting itself, by translatory motion, in a notch (32) of said push-button (21) of the pawl (20) which arranges itself in a suitable position when said pawl (20) is in the position for locking said spool (6).

6. Rewindable leash according to one or more of the preceding claims, characterized in that the locking of said spool (6) occurs by means of a radial translatory motion of said pawl (20) in contrast with said spring (24) and of a subsequent sliding of said slider (28).

7. Rewindable leash according to one or more of the preceding claims, characterized in that the placement of the push-buttons (21,29) of said pawl (20) and of said slider (28) is such that their movements in succession are performed with a single finger of the hand which holds the leash, said slider (28) locking said pawl (20) before said pawl (20) is pushed toward the outside by said contrast spring (24).

Fig.1

Fig.2

Fig.3

Fig.4

Fig.5

Fig. 6

European
Patent Office

EUROPEAN SEARCH
REPORT

Application Number

EP 91 11 0792

## DOCUMENTS CONSIDERED TO BE RELEVANT

| Category | Citation of document with indication, where appropriate, of relevant passages | | Relevant to claim | CLASSIFICATION OF THE APPLICATION (Int. Cl.5) |
|---|---|---|---|---|
| X | GB-A-2 199 306 | (KOREA MEASURES CO LTD) | 1 | A 01 K 27/00 |
| | | – – – | | B 65 H 75/44 |
| A | GB-A-2 199 306 | (* page 4, line 31 - page 7, line 3; figures 1-4 ) | 2-7 | |
| | | – – – | | |
| X | DE-U-8 410 346 | (BOGDAHN) | 1 | |
| | | – – – | | |
| A | DE-U-8 410 346 | (* page 8 - page 11; figures 1-3 *) | 2-7 | |
| | | – – – | | |
| A | EP-A-0 093 445 | (HAVERKAMP) | 1,3,5 | |
| | | – – – – – | | |

|  |
|---|
| **TECHNICAL FIELDS SEARCHED (Int. Cl.5)** |
| A 01 K |
| B 65 H |

The present search report has been drawn up for all claims

| Place of search | Date of completion of search | Examiner |
|---|---|---|
| The Hague | 09 September 91 | VON ARX V.U. |